# EUROPÄISCHE PATENTANMELDUNG

(11) **EP 1 795 982 A1**
(43) Veröffentlichungstag der Anmeldung: **13.06.2007**
(21) Anmeldenummer: 05026964.6
(22) Anmeldetag: 09.12.2005
(51) Int. Cl.: G05B 19/05

(54) **Verfahren und System zur Transformation von Elementen eines in einer Funktionsplandarstellung vorliegenden Steuerungsprogramms in eine Kontaktplandarstellung**

(71) Anmelder: SIEMENS AKTIENGESELLSCHAFT, 80333 München (DE)
(72) Erfinder: Opaterny, Thilo, 90453 Nürnberg (DE)

(57) **Zusammenfassung**

Die Erfindung betrifft ein System zur Transformation von Elementen (1) eines in einer Kontaktplandarstellung vorliegenden Steuerungsprogramms (2) in eine Funktionsplandarstellung, wobei das Steuerungsprogramm (2) mindestens ein Netzwerk (3) mit Elementen (1) aufweist, welche miteinander über Ein-/Ausgänge (4) und/oder mit Operanden (5) verbindbar sind, wobei das System Mittel (8) zur Transformation eines UND-Elements (11) entsprechend der Anzahl seiner beschalteten Eingänge (4) in eine Reihenschaltung von Kontakten (12) und zur Verbindung aller Eingänge (4) des UND-Elements (11) mit Operanden (5) und/oder mit Ausgängen von speicherlosen booleschen Elementen aufweist. Durch die Transformation umwandelbarer UND-Elemente (11) in Reihenschaltungen sind die gewünschten Operanden (5) auch in einer Kontaktplandarstellung zur Abfrage eines Zwischenergebnisses erreichbar. Für die Speicherung dieser Zwischenergebnisse ist auch eine Platzierung von speichernden Elementen in einer Parallelschaltung des Netzwerks in Funktionsplandarstellung zulässig.

## Beschreibung

Die Erfindung betrifft ein Verfahren zur Transformation von Elementen eines in einer Funktionsplandarstellung vorliegenden Steuerungsprogramms in eine Kontaktplandarstellung, wobei das Steuerungsprogramm mindestens ein Netzwerk mit Elementen aufweist, welche mit ihren Ein-/Ausgängen und/oder Operanden untereinander verbunden sind. Die Erfindung betrifft ein dazu korrespondierendes System.

Die Norm IEC 61131 beschreibt verschiedene Programmiersprachen für die Programmierung von speicherprogrammierbaren Steuerungen (SPS). Eine der dort genannten graphischen Programmiersprachen ist die Funktionsbausteinsprache bzw. Funktionsplansprache (FUP), eine andere graphische Programmiersprache ist der Kontaktplan (KOP). In KOP erfolgt die Programmierung mit Kontakten und Spulen. Diese bewährte und auf vielen technischen Anwendungsgebieten übliche Darstellungsform hat ihren Ursprung in der Relaistechnik. Alle nicht booleschen Verknüpfungen werden in Form von Kästen dargestellt. In FUP werden auch die booleschen Verknüpfungen mit Kästen in Form von Gattern dargestellt. Bis auf die booleschen Verknüpfungen besteht zwischen FUP und KOP kaum ein Unterschied.

Die Norm erklärt die Semantik der einzelnen Sprachelemente, jedoch nicht die Abbildung der graphischen Sprachen auf den in der SPS vorhandenen Mikrocontroller. Während die Abbildung von Textsprachen wie Structured-Text (ST) oder Anweisungsliste (AWL) nahe liegend ist - jedes sprachliche Konstrukt wird auf mehrere Mikrocontrollerbefehle abgebildet - ist die Abbildung von graphischen Programmiersprachen nicht trivial, weil Abhängigkeiten und versteckte Rückkopplungen existieren können.

Oftmals müssen Steuerungsprogramme in einer bestimmten Sprache, beispielsweise in KOP, vorliegen, um problemlos in einem Arbeitsumfeld beispielsweise eines Automobilherstellers einsetzbar zu sein. Ist dieses Steuerungsprogramm bereits in einer anderen vorhanden, beispielsweise in FUP, so wird ein System zur Sprachumwandlung benötigt.

Ein bekanntes Beispiel für die Umsetzung der Norm in ein Entwicklungswerkzeug ist Step7, welches eine Transformation zumindest der drei Basissprachen KOP, FUP und AWL ineinander ohne Informationsverlust erlaubt, wenn ein Steuerungsprogramm in KOP dargestellt werden kann.

Allerdings hat Step7 den Nachteil, dass nicht alle Netzwerke, wie sie in der IEC 61113 beschrieben sind, auch realisiert werden können. So ist es in Step7 nicht erlaubt, Zuweisungen in Parallelschaltungen einzusetzen. Grund dafür ist, dass letztlich ein Steuerungsprogramm in KOP immer über FUP und im Anschluss auf AWL abgebildet bzw. umgewandelt wird. Jedoch existieren bestimmte KOP-Zwischenergebnisse nach der Transformation nicht mehr in FUP. Die letztere Darstellung des Steuerungsprogramms wird aber benötigt, um das Steuerungsprogramm als eine Folge von Einzelanweisungen auf einer Zielmaschine, wie z.B. einem Mikrocontroller, ausführen zu können. Die Anweisungsliste lässt sich in genau der Reihenfolge abbilden, in der sie niedergeschrieben ist. Bei Steuerungsprogrammen, welche in graphischer Programmiersprache vorliegen, ist dies jedoch nicht so einfach möglich. Bei der graphischen Programmierung zeichnet der Anwender üblicherweise ein Netzwerk mittels eines Editors. Er hat die Möglichkeit, einzelne Elemente aus einer Bibliothek auszuwählen, zu platzieren, zu beschriften und zu verbinden. Dabei werden dem Anwender üblicherweise keine Vorgaben über die Reihenfolge der einzelnen Schritte gemacht. Der Editor gibt schließlich eine Repräsentation der graphischen Information an den Compiler weiter.

Nach einer Übersetzung der Anweisungsliste (AWL) in ein Maschinenprogramm und während Ausführen dieses Programms durch einen Mikrocontroller kann es vorkommen, dass die technische Anlage nicht ordnungsgemäß funktioniert. Im Vergleich zur Simulation eines Steuerungsprogramms in einer Entwicklungsumgebung ist aber eine Unterbrechung einer Anlage nicht ohne weiteres möglich, um den Fehler zu beheben. Dies ist z.B. bei Aufzügen, Pressen, Reaktoren der Fall, die nicht sofort stillgesetzt werden können.

Ein großes Problem ist nun aber, dass bei der Erstellung eines Steuerungsprogramms nicht zwischen beiden Darstellungsarten FUP und KOP hin- und hergeschaltet werden kann, da nicht jedes Netzwerk von einer Funktionsplandarstellung in eine Kontaktplandarstellung umgewandelt werden kann. Dies liegt darin begründet, dass FUP hinsichtlich seiner Funktionalität erheblich mächtiger ist als KOP. Insbesondere lassen sich in FUP Funktionen in einem einzigen Netzwerk darstellen, für deren Darstellung in KOP zwei oder mehr Netzwerke benötigt werden.

Der Erfindung liegt die Aufgabe zugrunde, eine Transformation von Elementen eines in einer Funktionsplandarstellung vorliegenden Steuerungsprogramms in eine Kontaktplandarstellung zu erreichen, welche die zuvor genannten Einschränkungen von Step7 nicht aufweist.

Diese Aufgabe wird durch ein Verfahren zur Transformation von Elementen eines in einer Funktionsplandarstellung vorliegenden Steuerungsprogramms in eine Kontaktplandarstellung gelöst, wobei das Steuerungsprogramm mindestens ein Netzwerk mit Elementen in Form von Funktionsbausteinen aufweist, welche mit ihren Ein-/Ausgängen und/oder Operanden untereinander verbunden sind, wobei bei der Transformation ein UND-Element entsprechend der Anzahl seiner beschalteten Eingänge in eine Reihenschaltung von Kontakten umgewandelt wird und wobei für eine Transformation alle Eingänge des UND-Elements mit Operanden und/oder mit Ausgängen von speicherlosen booleschen Elementen verbunden werden.

Diese Aufgabe wird durch ein System zur Transformation von Elementen eines in einer Kontaktplandarstellung vorliegenden Steuerungsprogramms in eine Funktionsplandarstellung gelöst, wobei das Steuerungsprogramm mindestens ein Netzwerk mit Elementen aufweist, welche miteinander über Ein-/Ausgänge und/oder mit Operanden verbindbar sind, wobei das System Mittel zur Transformation eines UND-Elements entsprechend der Anzahl seiner beschalteten Eingänge in eine Reihenschaltung von Kontakten und zur Verbindung aller Eingänge des UND-Elements mit Operanden und/oder mit Ausgängen von speicherlosen booleschen Elementen aufweist.

Der Erfindung liegt die Erkenntnis zugrunde, dass ein Steuerungsprogramm, welches in einer Funktionsplandarstellung vorliegt, bei bisher bekannten Verfahren nur unzureichend in eine Kontaktplandarstellung umgewandelt werden konnte. Häufig war eine Rücktransformation nicht mehr möglich. Dies ist z.B. dann der Fall, wenn ein Eingang eines UND-Elements nicht mit einem Operanden verbunden ist.

Um die Möglichkeit einer sicheren Rücktransformation zu gewährleisten, musste bis jetzt auch auf Zuweisungen in einer Parallelschaltung im Netzwerk des Steuerungsprogramms verzichtet werden. Damit verbunden war auch kein Zugriff mehr auf Zwischenergebnisse des Netzwerkes in der Funktionsplandarstellung möglich, wie dies bei der Darstellung des Netzwerks im Kontaktplan möglich ist.

Erfindungsgemäß werden nun für eine Transformation alle Eingänge des UND-Elements (ausschließlich) mit Operanden und/ oder mit Ausgängen von speicherlosen booleschen Elementen verbunden. Dadurch ist vorteilhaft eine eindeutige Transformation von einer FUP-Darstellung in eine KOP-Darstellung möglich.

In einer besonderen Ausführungsform wird bei der Transformation ein ODER-Element in eine Parallelschaltung von Elementen entsprechend der Anzahl seiner beschalteten Eingänge umgewandelt. Dadurch können komplexere Netzwerke erstellt werden.

Bei der Transformation werden die Operanden in Schließer- oder Öffnerkontakte umgewandelt. Negierte Operanden werden dabei durch einen Öffner, nicht negierte Operanden durch einen Schließer ersetzt.

Insbesondere wird ein Operand, der an einen Eingang eines nachfolgenden Elements angeschlossen ist, in einen Kontakt, der mit einer Stromschiene als Quelle für den Signalfluss verbunden ist, umgewandelt. Dies kann dann schrittweise für alle Operanden des Netzwerks erfolgen.

Weist das Netzwerk speichernde Elemente wie Flipflops oder Spulen auf, so können auf diese Weise interne Zustände des Netzwerks im Sinne eines Schaltwerks weiterverarbeitet und gespeichert werden.

Weist das Netzwerk zumindest eine Negation an einem Element auf, so wird bei der Transformation zwischen dem zugehörigen Ausgang und dem Eingang des nachfolgenden Elementes ein zusätzliches Element für die Negation in der Kontaktplandarstellung erzeugt.

Vor der Transformation der Elemente wird geprüft, ob die jeweiligen untereinander verbundenen Ein- und Ausgänge bzw. Operanden der Elemente zueinander kompatibel sind. Ergibt die Prüfung im Rahmen der Transformation, dass die jeweiligen untereinander verbundenen Ein- und Ausgänge bzw. Operanden der Elemente zueinander nicht kompatibel sind, so kann in vorteilhafter Weise eine Rückmeldung an den Anwender ausgegeben werden. Dies ist z.B. dann der Fall, wenn eine Verbindung vom Typ "bit", die andere Verbindung vom Typ "int" ist. Der Anwender kann daraufhin das in der Funktionsplandarstellung vorliegende Steuerungsprogramm derart verändern, dass eine Transformation möglich ist. Hierzu können dem Anwender geeignete Informationen durch die Rückmeldung gegeben werden.

Weist das System Umwandlungsmittel zur Umwandlung der graphischen Elemente des Steuerprogramms in maschinennahe Befehle des Steuerprogramms auf, so können diese auf einer speicherprogrammierbaren Steuerung zur Steuerung und/oder Regelung eines technischen Prozesses und/oder einer technischen Anlage ausgeführt werden.

Das System weist vorteilhaft einen Graphikeditor zur Eingabe und/oder Änderung des Netzwerks in der Funktionsplandarstellung und/oder in der Kontaktplandarstellung auf. Durch die graphische Eingabemöglichkeit, wie z.B. mittels einer Maus, können Änderungen besonders schnell bewerkstelligt werden.

Nachfolgend wird die Erfindung anhand der in den Figuren dargestellten Ausführungsbeispiele näher beschrieben und erläutert.

Dabei zeigt
- FIG 1: ein System zur Transformation von Elementen eines in Funktionsplandarstellung vorliegenden Steuerungsprogramms in eine Kontaktplandarstellung,
- FIG 2: das Netzwerk des Steuerungsprogramms in Funktionsplandarstellung gemäß FIG 1,
- FIG 3: ein zum Netzwerk des Steuerungsprogramms aus FIG 1 äquivalentes Netzwerk,
- FIG 4: das Netzwerk gemäß FIG 2 in erweiterter graphischer Funktionsplandarstellung,
- FIG 5: ein beispielhaftes Netzwerk in Funktionsplandarstellung, welches nicht in Kontaktplandarstellung transformiert werden kann,
- FIG 6: das beispielhafte Netzwerk gemäß FIG 5 in einer jeweils erweiterten graphischen Darstellungsform,
- FIG 7: ein UND-Element und seine transformierte Darstellung in Kontaktplandarstellung als Schließerkontakt,
- FIG 8: ein UND-Element mit einem negierten Operandeneingang und seine transformierte Darstellung in Kontaktplandarstellung als Öffnerkontakt,
- FIG 9: einen positiven Flankenerkenner und seine transformierte Darstellung in Kontaktplandarstellung mit der zugehörigen Operandenbezeichnung "op",
- FIG 10: ein Beispiel für vier Operandenzugriffe eines Elements in Funktions- und Kontaktplandarstellung,
- FIG 11: das Beispiel aus FIG 10 in der jeweils erweiterten graphischen Darstellungsform,
- FIG 12: eine Transformation einer Negation in ein Negationselement als Bauteil in Kontaktplandarstellung,
- FIG 13: eine beispielhafte Transformation eines UND-Elements mit einem vorgeschalteten Vergleicher in Funktions- und Kontaktplandarstellung,
- FIG 14: das Beispiel aus FIG 13 in der jeweils erweiterten graphischen Darstellungsform,
- FIG 15: ein Beispiel eines Netzwerks in Funktionsplandarstellung und
- FIG 16: das dazugehörige transformierte Netzwerk in Kontaktplandarstellung.

Die Erfindung wird anhand von mehreren Ausführungsbeispielen beschrieben.

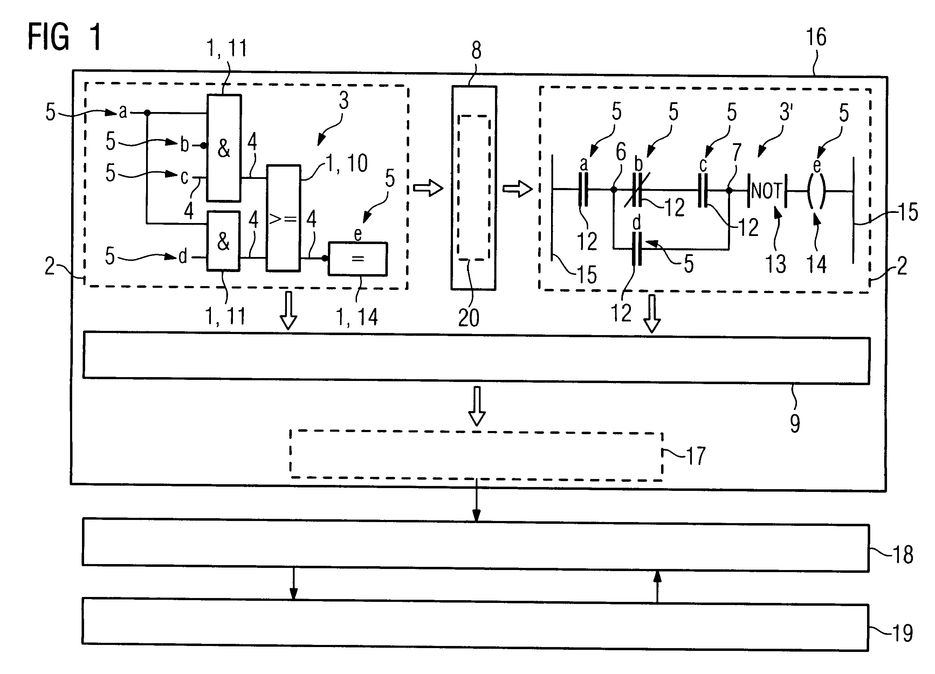

FIG 1 zeigt ein System zur Transformation von Elementen 1 eines in Funktionsplandarstellung vorliegenden Steuerungsprogramms 2 in eine Kontaktplandarstellung. Das Steuerungsprogramm 2 weist ein Netzwerk 3 auf, welches Elemente 1 aufweist, welche über ihre Ein- und Ausgänge 4 teilweise untereinander und teilweise mit Operanden 5 verbunden sind. Negierte Ein- oder Ausgänge werden in Form von Kringeln am Eingang bzw. am Ausgang des jeweiligen Gatters dargestellt.

Die Operanden 5 adressieren dabei ein Stück Speicher, z.B. Speicher der SPS. Speicher können z.B. Register, Datenspeicher, ein Stack, Ein-/Ausgänge bzw. deren Speicherabbild sein. Die Operanden 5 dienen als Informationsquellen oder Informationssenken. Das Betriebssystem der SPS bildet die physikalischen Eingänge, an welche Taster, induktive Signalgeber, Lichtschranken usw. angeschlossen sind, auf einen durch das Programm adressierbaren Speicher ab. Ein anderer Speicherbereich wird vom Betriebssystem der SPS auf die physikalischen Ausgänge abgebildet, an die Lampen, Relais, Schütze, Motoren oder sonstige Aktoren, die mehr oder weniger direkt angeschlossen sind. Diese Ein- und Ausgänge bekommen üblicherweise symbolische Namen, wie z.B. "Motor_Endschalter .links" für den Eingang I4.7.

Mit dem Bezugszeichen 8 ist ein Mittel zur Transformation von UND-Elementen 11 in jeweils eine Reihenschaltung und zur Transformation von ODER-Elementen 10 in jeweils eine Parallelschaltung bezeichnet.

Das Abbild des transformierten Netzwerks 3' ist in einem gestrichelt dargestellten Kasten des Steuerungsprogramms 2 dargestellt. Das transformierte Netzwerk 3' weist eine Vielzahl von Kontakten, wie z.B. drei Schließerkontakte 12, einen Öffnerkontakt 12, ein Negationselement 13 sowie eine Spule 14 als speicherndes Element auf. Dem logischen Anschluss eines Funktionselements in der Funktionsplandarstellung entspricht die Verbindung eines Bauteils bzw. Elements in der Kontaktplandarstellung. Die Kontakte, Spulen und Kästen sind durch Linien miteinander verbunden bzw. verdrahtet. Durch die Linien wird in FUP der Informationsfluss - in KOP der Stromfluss - dargestellt. Ein Draht verbindet eine Informationsquelle mit mehreren Informationssenken. In KOP wird ein ODER-Gatter durch eine Parallelschaltung dargestellt. Dies ist kein Widerspruch, denn der senkrechte Strich in KOP, der zum Zusammenführungspunkt 7 einer Parallelschaltung führt, ist eigentlich ein Bauteil. Auch in KOP gilt somit: Ein Draht verbindet eine Informationsquelle mit mehreren Informationssenken.

Einfache logische Funktionen wie UND werden durch eine Reihenschaltung von Kontakten dargestellt. Ein ODER wird durch eine Parallelschaltung von Kontakten dargestellt. Ein besonderes Element 1 eines Kontaktplanes ist der Kontakt 12. Die Kontakte dienen zur Abfrage von booleschen Operanden "a" - "e". Es wird zwischen Schließern 12 und Öffnern 12 unterschieden. Negierte Eingänge werden in Kontaktplandarstellung als durchgestrichene Kontakte 12 dargestellt. Durch einen Öffner 12 wird die Negation eines Operanden realisiert. Ein weiteres besonderes Element ist die (Relais-)Spule 14, welche der Zuweisung eines Verknüpfungsergebnisses an einen booleschen Operanden "e" dient. Mit dem Bezugszeichen 13 ist ein Negationselement oder NOT-Element bezeichnet, welches der Invertierung des eingangsseitigen Signals dient. Links und rechts wird das Netzwerk durch Stromschienen 15 begrenzt. Andere Elemente werden durch einen Kasten dargestellt. Im Kasten steht der Name der Funktion, die durch dieses Bauteil realisiert wird, wie z.B. ein Vergleicher, eine Addition oder ein Flipflop. Im Falle von speichernden Elementen, wie z.B. im Falle der Spule 14, ist oberhalb des betreffenden Elements ein Operand "e" angegeben.

Umwandlungsmittel 9 wandeln nun die graphischen Elemente 1 des Steuerprogramms 2 in maschinennahe Befehle 17 des Steuerprogramms 2 um, so dass diese auf einer speicherprogrammierbaren Steuerung 18 zur Steuerung und/oder Regelung eines technischen Prozesses und/oder einer technischen Anlage 19 ausgeführt werden können. Die Erstellung der verschiedenen Darstellung des Steuerprogramms 2 sowie der maschinennahen Befehle 17 aus dem Steuerungsprogramm 2 erfolgt gemäß Ausführungsbeispiel innerhalb eines Entwicklungssystems 16.

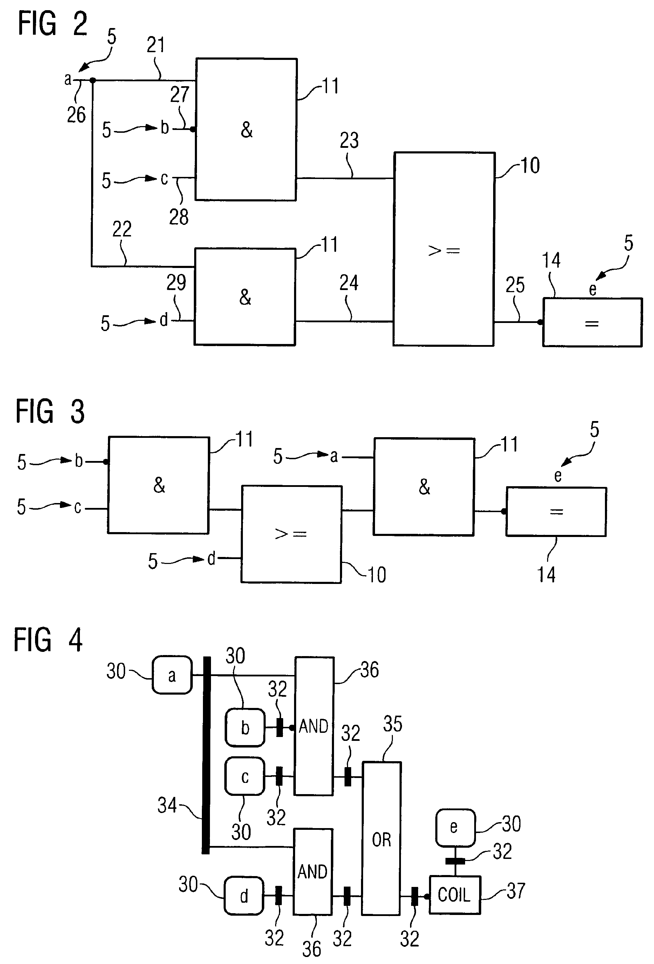

FIG 2 zeigt das Netzwerk 3 des Steuerungsprogramms 2 in Funktionsplandarstellung gemäß FIG 1. Das Netzwerk 3 weist eine Vielzahl von Funktionselementen in Form von Gattern 10, 11 oder Kästen auf, in welchen die jeweilige Funktion eingetragen ist. Mit dem Bezugszeichen 11 ist ein UND-Element, mit dem Bezugszeichen 12 ein ODER-Element dargestellt. Der Kasten 14 mit dem darüber eingetragenen Operanden "e" ist ein Speicherelement, wie z.B. eine Spule im vorliegenden Fall. Die Ein- und Ausgänge der Elemente 10, 11, 14 sind über Anschlussverbindungen 21-25 zur Darstellung des Informationsflusses verbunden.

FIG 3 zeigt ein zum Netzwerk 3' des Steuerungsprogramms 2 aus FIG 1 äquivalentes Netzwerk in einer Funktionsplandarstellung. Wie direkt festgestellt werden kann, unterscheiden sich die beiden Netzwerke strukturell komplett voneinander. Dennoch entsteht bei einer Umwandlung des Funktionsplans aus FIG 2 und bei der Umwandlung des Funktionsplans aus FIG 3 das gleiche KOP-Netzwerk. Diese äquivalente Darstellungsform in der Funktionsplandarstellung ist eine beispielhaft von mehreren möglichen Darstellungsformen, welche von einem Entwicklungssystem aus der Kontaktplandarstellung des Netzwerks 3' gemäß FIG 1 umgewandelt werden kann.

Wie nun auch erkennbar ist, kann die logische Verknüpfung der Operanden a AND /b AND C im Netzwerk 3 des Steuerungsprogramms 2 gemäß FIG 1 erreicht werden, indem gemäß der Erfindung alle Eingänge der UND-Elemente 11 mit Operanden und/oder mit Ausgängen von speicherlosen booleschen Elementen verbunden werden. Dies kann z.B. durch eine Prüfung während der Eingabe der graphischen Elemente 11-14 gemäß FIG 3 erfolgen. Im Beispiel der FIG 1 sind hierzu geeignete Prüfungsmittel 20 im Block 8 dargestellt. Sind alle Eingänge der UND-Elemente 11 geeignet beschaltet, wird eine Transformation von FUP nach KOP zugelassen, die dann auch eindeutig ist.

Diese Möglichkeit fehlt aber in der korrespondierenden Funktionsplandarstellung gemäß FIG 3. So existiert keine Stelle im Funktionsplan, an der das Zwischenergebnis a AND /b AND c zur Verfügung stehen würde.

Würde man nun zur Zwischenspeicherung eine Spule als speicherndes Element für eine Zuweisung in Signalflussrichtung nach dem Schließer 33 gemäß der FIG 2 einfügen, so repräsentiert die "Logik" dieser Spule die boolesche Beziehung a AND d. Dagegen wäre dieses Zwischenergebnis in einer bisherigen Funktionsplandarstellung nicht verfügbar. Folglich ist es nicht möglich, in diesem Funktionsplan hierzu ein speicherndes Element, wie ein Flipflop oder die Spule, einzusetzen, um dieses Zwischenergebnis auslesen zu können.

FIG 4 zeigt das Netzwerk gemäß FIG 2 in erweiterter graphischer Funktionsplandarstellung. Bauteile sind durch Kästen 35, 36, 37 dargestellt. Innerhalb eines Kastens 35, 36, 37 befindet sich der Gattername oder die Funktion. Eine Verbindung zwischen den Kästen 32 wird als Draht bezeichnet. Die Kästen 30 mit abgerundeten Ecken entsprechen den Operanden "a"-"e". Alle Bauteile, Operanden und Drähte müssen vom System bezeichnet werden, damit sie referenzierbar sind. Sie werden daher durchnummeriert. Die Bezeichner der Bauteile und Verbindungen sind für den Anwender nur von geringem Nutzen, da dieser üblicherweise mit einer Maus oder einem anderen graphischen Eingabegerät selektiert.

Die erweiterte graphische Funktionsplandarstellung ist eine mögliche systeminterne Darstellung des Netzwerks in FUP. In gleicher Weise kann zur systeminternen Darstellung des Netzwerks in KOP eine weitestgehend ähnliche erweiterte graphische Darstellung verwendet werden. Beide Sprachen sind sich so ähnlich, dass sie durch dieselben Strukturen dargestellt werden können.

Unterschiede zwischen FUP und KOP:
- In FUP existieren keine Kontakte. Die Zugriffe auf boolesche Operanden werden durch die Operanden selbst dargestellt. Man kann auf die Zuweisungsspulen verzichten.
- Das UND-Element ist ein Bauteil und keine Reihenschaltung von Kontakten.
- Das ODER-Element ist ein Bauteil. In der Kontaktplandarstellung existiert nur scheinbar kein ODER-Element. Dieses entspricht der rechten senkrechten Linie einer Parallelschaltung in KOP.
- Ein- und Ausgänge können negiert sein. In FUP existiert kein spezielles Negationselement (NOT-Glied). Stattdessen wird in FUP ein Ausgang negiert (mit Kringel bezeichnet). In KOP werden Ausgänge über ein Negationselement negiert.
- Alle anderen Elemente sind in beiden Sprachen vorhanden, wenn gleich die graphische Ausgestaltung unterschiedlich sein mag.
- In FUP existieren keine Stromschienen.

Die Transformation eines Netzwerks wird im Folgenden im Detail beschrieben, wobei die genaue Abarbeitungsreihenfolge für alle nachfolgenden Punkte eingehalten werden muss:
1. Zuerst wird untersucht, ob sich das Netzwerk in KOP darstellen lässt. Dazu müssen alle UND-Elemente betrachtet werden. An allen beschalteten Eingängen eines UND-Elements dürfen nur boolesche Operanden oder nicht negierte kontaktähnliche Bauteile angeschlossen sein.
2. Für die lesenden Operandenzugriffe werden Kontakte erzeugt. Dazu werden alle Drähte gesammelt, die zu booleschen Operanden führen. Ist der Eingang negiert, so wird ein Öffner erzeugt, anderenfalls wird ein Schließer erzeugt. Die Anschlüsse auf der linken Seite der erzeugten Elemente bleiben offen.
3. Für die schreibenden Operandenzugriffe werden Spulen erzeugt. Dazu werden alle Drähte gesammelt, die zu booleschen Operanden führen. Für jeden Operanden wird eine Spule erzeugt. Ist nur ein Operand an diesem Draht angeschlossen und der Ausgang negiert, so wird eine negierte Spule erzeugt.
4. Die UND-Glieder werden in Reihenschaltungen umgewandelt. Die am UND-Glied angeschlossenen Drähte werden mit dem offenen Eingang des am jeweils nächsten Eingang des UND-Glieds angeschlossenen Elements verbunden. Der am letzten Eingang des UND-Glieds angeschlossene Draht übernimmt die Funktion des am Ausgang des UND-Glieds angeschlossenen Drahts.
5. Es werden die beiden Stromschienen erzeugt und alle offenen Eingänge der jeweils ersten Elemente in der erzeugten Reihenschaltung an die (linke) Stromschiene angeschlossen.
6. Bei allen negierten booleschen Anschlüssen wird die Negation des Anschlusses durch ein Negationsglied ersetzt, welches dann in den Draht eingefügt wird.

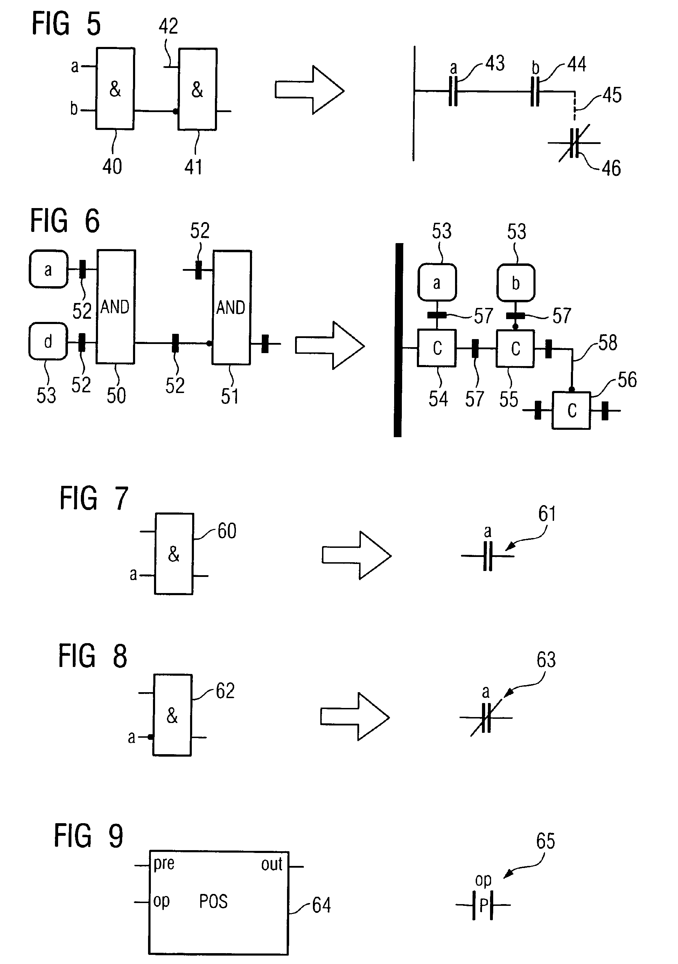

FIG 5 zeigt ein beispielhaftes Netzwerk in Funktionsplandarstellung, welches nicht in Kontaktplandarstellung transformiert werden kann. Das UND-Element 41 weist einen negierten Eingang auf, an welchen ein weiteres UND-Element 40 angeschlossen ist. Die Negation müsste aber auf einen Öffner transformiert werden. Allerdings existiert kein entsprechender Operand. Der rechte Teil der FIG 5 zeigt, wie sonst ein UND-Glied anstelle des Operanden oberhalb des Öffners 46 eingezeichnet werden müsste. Diese Darstellung ist aber nicht zulässig. Wenn man diese Funktion benötigt, muss man eine Aufteilung auf zwei Netzwerke vornehmen.

FIG 6 zeigt das beispielhafte Netzwerk gemäß FIG 5 in einer jeweils erweiterten graphischen Darstellungsform. Wie ersichtlich ist, werden für Verbindungen 52 oder Drähte 57 sowie für die Operanden 53 und Funktions- bzw. Bauelemente 50, 51 die gleichen graphischen Objekte verwendet. Auf diese Weise ist eine rechnergestützte und automatisierte Umwandlung von der erweiterten graphischen Kontaktplandarstellung in die erweiterte graphische Funktionsplandarstellung und umgekehrt möglich. Hierzu dienen die durchnummerierten Referenzierungen der Bauelemente, Drähte etc..

FIG 7 zeigt ein UND-Element 60 und seine transformierte Darstellung 61 in Kontaktplandarstellung als Schließerkontakt.

FIG 8 zeigt ein UND-Element 61 mit einem negierten Operandeneingang und seine transformierte Darstellung 63 in Kontaktplandarstellung als Öffnerkontakt.

FIG 9 zeigt einen positiven Flankenerkenner 64 und seine transformierte Darstellung 65 in Kontaktplandarstellung mit der zugehörigen Operandenbezeichnung "op". Der Operandeneingang "op" wird im rechten Teil der FIG 9 oberhalb des Bauteils eingezeichnet.

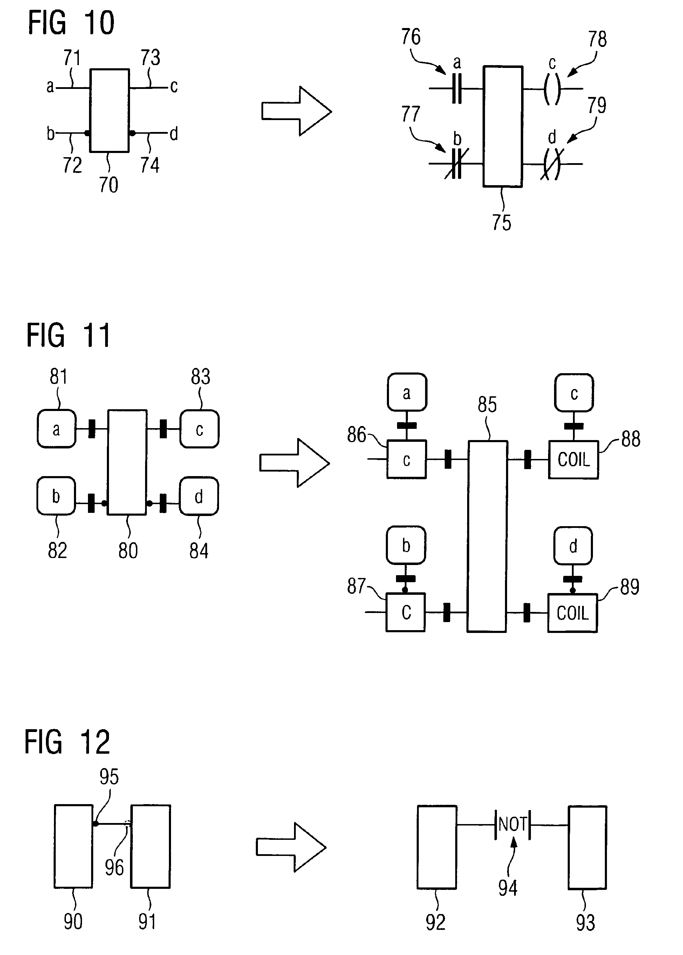

FIG 10 zeigt ein Beispiel für vier Operandenzugriffe eines Elements in Funktions- und Kontaktplandarstellung. Die zu lesenden Operanden "a", "b" werden auf Kontakte 76, 77 abgebildet. Aus einem nicht negierten lesenden Zugriff auf einen booleschen Operanden "a" wird ein Schließer 76. Aus einem nicht negierten schreibenden Zugriff auf den Operanden "c" wird eine Spule 78. Aus einem negierten schreibenden Zugriff auf den Operanden "d" wird eine negierte Spule 79.

FIG 11 zeigt das Beispiel aus FIG 10 in der jeweils erweiterten graphischen Darstellungsform. Durch die modulartige Anordnung gleicher graphischer Symbole ist sofort erkennbar, wie diese automatisiert nach den oben genannten Transformationsregeln von FUP nach KOP in der jeweils erweiterten Darstellung umgewandelt werden können.

FIG 12 zeigt eine Transformation einer Negation in ein Negationselement als Bauteil in Kontaktplandarstellung. Es spielt dabei keine Rolle, ob die Negation zum Element 90 oder 91 gehört. In beiden Fällen wird diese durch ein Negationselement 94 ersetzt. Dies ist im rechten Teil der FIG 12 dargestellt.

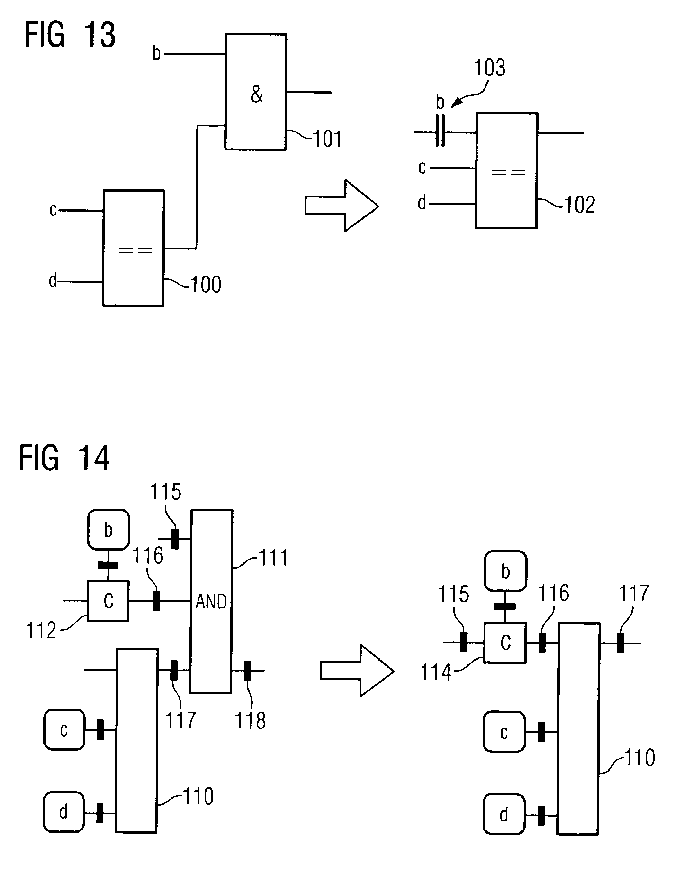

FIG 13 zeigt eine beispielhafte Transformation eines UND-Elements mit einem vorgeschalteten Vergleicher in Funktions- und Kontaktplandarstellung. Bei dem Element 100 handelt es sich um einen Vergleicher als kontaktähnliches Bauelement. Im rechten Teil ist die entsprechende Transformation des UND-Elements 101 und des Vergleichers 100 in eine Reihenschaltung aus einem Kontakt 103 mit dem Operanden "b" sowie dem Vergleicher-Kontakt 102 dargestellt.

FIG 14 zeigt das Beispiel aus FIG 13 in der jeweils erweiterten graphischen Darstellungsform. Im Beispiel der FIG 14 wurden für gleiche graphische Symbole die gleichen Bezugszeichen verwendet, so dass die bei der Transformation umgesetzten Symbole, wie die Drähte 115-117, leicht nachverfolgt werden kann.

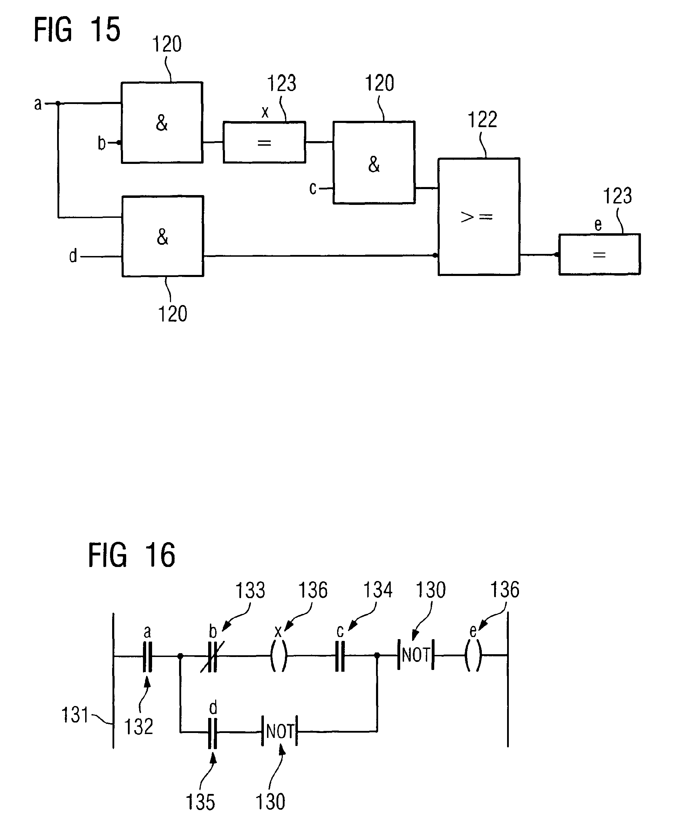

FIG 15 zeigt ein Beispiel eines Netzwerks in Funktionsplandarstellung. Im oberen UND-Element ist eine boolesche Verknüpfung a AND /b verfügbar.

FIG 16 zeigt das zugehörige transformierte Netzwerk in Kontaktplandarstellung. Hier ist eine Zuweisung in einer Parallelschaltung des Netzwerks realisiert. Die Zuweisung dient dazu, interne Zustände des Netzwerks im Steuerprogramm und im späteren Betrieb in einem Steuerungsrechner auslesen zu können. Mit der Kenntnis der internen Zustände ist eine rasche Fehlerbehebung vorteilhaft möglich.

Das beispielhaft gezeigte Netzwerk in FUP kann somit ohne Einschränkung in ein semantisch äquivalentes Netzwerk umgewandelt werden. Im vorliegenden Beispiel sind nun auch Zuweisungen vor einem ODER möglich. Auch ist eine Negation von Ausgängen erlaubt.

Die Zuweisung dient, wie bereits beschrieben, um interne Zustände des Netzwerks im Steuerprogramm und im späteren Betrieb in einem Steuerungsrechner auslesen zu können. Mit der Kenntnis der internen Zustände ist eine rasche Fehlerbehebung vorteilhaft möglich.

Zusammenfassend betrifft die Erfindung ein System zur Transformation von Elementen 1 eines in einer Funktionsplandarstellung vorliegenden Steuerungsprogramms 2 in eine Kontaktplandarstellung, wobei das Steuerungsprogramm 2 mindestens ein Netzwerk 3 mit Elementen 1 aufweist, welche miteinander über Ein-/Ausgänge 4 und/oder mit Operanden 5 verbindbar sind, wobei das System Mittel 8 zur Transformation eines UND-Elements 11 entsprechend der Anzahl seiner beschalteten Eingänge 4 in eine Reihenschaltung von Kontakten 12 und zur Verbindung aller Eingänge 4 des UND-Elements 11 mit Operanden 5 und/oder mit Ausgängen von speicherlosen booleschen Elementen aufweist. Durch die Transformation umwandelbarer UND-Elemente 11 in Reihenschaltungen sind die gewünschten Operanden 5 auch in einer Kontaktplandarstellung zur Abfrage eines Zwischenergebnisses erreichbar. Für die Speicherung dieser Zwischenergebnisse ist auch eine Platzierung von speichernden Elementen in einer Parallelschaltung des Netzwerks in Funktionsplandarstellung zulässig.

## Patentansprüche

1. Verfahren zur Transformation von Elementen (1) eines in einer Funktionsplandarstellung vorliegenden Steuerungsprogramms (2) in eine Kontaktplandarstellung, wobei das Steuerungsprogramm (2) mindestens ein Netzwerk (3) mit Elementen (1) in Form von Funktionsbausteinen aufweist, welche mit ihren Ein-/Ausgängen (4) und/oder Operanden (5) untereinander verbunden sind, wobei bei der Transformation ein UND-Element (11) entsprechend der Anzahl seiner beschalteten Eingänge (4) in eine Reihenschaltung von Kontakten (12) umgewandelt wird und wobei für eine Transformation alle Eingänge (4) des UND-Elements (11) mit Operanden (5) und/oder mit Ausgängen von speicherlosen booleschen Elementen verbunden werden.

2. Verfahren nach Anspruch 1, wobei bei der Transformation ein ODER-Element (10) in eine Parallelschaltung von Elementen (1) entsprechend der Anzahl seiner beschalteten Eingänge (4) umgewandelt wird.

3. Verfahren nach Anspruch 1 oder 2, wobei die Operanden (5) in Schließer- oder Öffnerkontakte (12) umgewandelt werden.

4. Verfahren nach Anspruch 3, wobei der Operand (5), der an einen Eingang eines nachfolgenden Elements (1) angeschlossen ist, in einen Kontakt (12), der mit einer Stromschiene (15) als Quelle für den Signalfluss verbunden ist, umgewandelt wird.

5. Verfahren nach einem der vorangegangenen Ansprüche, wobei das Netzwerk (3) speichernde Elemente (14) wie Flipflops, oder Spulen aufweisen kann.

6. Verfahren nach einem der vorangegangenen Ansprüche, wobei das Netzwerk (3) zumindest an einem Element eine Negation aufweisen kann und wobei bei der Transformation zwischen dem zugehörigen Ausgang und dem Eingang des nachfolgenden Elementes ein zusätzliches Element für die Negation erzeugt wird.

7. Verfahren nach einem der vorangegangenen Ansprüche, wobei vor der Transformation der Elemente (1) geprüft wird, ob die jeweiligen untereinander verbundenen Ein- und Ausgänge (4) bzw. Operanden (5) der Elemente (1) zueinander kompatibel sind.

8. System zur Transformation von Elementen (1) eines in einer Funktionsplandarstellung vorliegenden Steuerungsprogramms (2) in eine Kontaktplandarstellung, wobei das Steuerungsprogramm (2) mindestens ein Netzwerk (3) mit Elementen (1) aufweist, welche miteinander über Ein-/Ausgänge (4) und/oder mit Operanden (5) verbindbar sind, wobei das System Mittel (8) zur Transformation eines UND-Elements (11) entsprechend der Anzahl seiner beschalteten Eingänge (4) in eine Reihenschaltung von Kontakten (12) und zur Verbindung aller Eingänge (4) des UND-Elements (11) mit Operanden (5) und/oder mit Ausgängen von speicherlosen booleschen Elementen aufweist.

9. System nach Anspruch 8, wobei das System Mittel (8) zur Transformation eines ODER-Elements (10) in eine Parallelschaltung von Elementen (1) entsprechend der Anzahl seiner beschalteten Eingänge (4) aufweist.

10. System nach Anspruch 8 oder 9, wobei das System einen Graphikeditor zur Eingabe und/oder Änderung des Netzwerks (3) in der Kontaktplandarstellung und/oder in der Funktionsplandarstellung aufweist.

11. System nach einem der Ansprüche 8 bis 10, wobei das System Umwandlungsmittel (9) zur Umwandlung der graphischen Elemente (1) des Steuerprogramms (2) in maschinennahe Befehle (17) des Steuerprogramms (2) zur rechnergestützten Ausführung der Befehle (17) auf einer speicherprogrammierbaren Steuerung (18) zur Steuerung und/oder Regelung eines technischen Prozesses und/oder einer technischen Anlage (19) aufweist.
